(19) Europäisches Patentamt
European Patent Office
Office européen des brevets

(11) Veröffentlichungsnummer: **0 176 730**
**A2**

(12) # EUROPÄISCHE PATENTANMELDUNG

(21) Anmeldenummer: 85110355.6

(22) Anmeldetag: 19.08.85

(51) Int.Cl.⁴: C 09 B 45/28
D 06 P 1/10

(30) Priorität: 31.08.84 DE 3432080

(43) Veröffentlichungstag der Anmeldung:
09.04.86 Patentblatt 86/15

(84) Benannte Vertragsstaaten:
CH DE FR GB LI

(71) Anmelder: BAYER AG
Konzernverwaltung RP Patentabteilung
D-5090 Leverkusen 1 Bayerwerk(DE)

(72) Erfinder: Mennicke, Winfried, Dr.
Steglitzer Strasse 8
D-5090 Leverkusen(DE)

(54) **Polyazofarbstoffe.**

(57) Farbstoffe der Formel

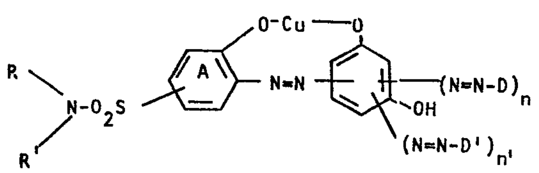

(I)

mit der in der Beschreibung angegebenen Substituentenbedeutungen eignen sich zum Färben und Bedrucken natürlicher und synthetischer stickstoffhaltiger Materialien, insbesondere Wolle, Polyamid, Leder. Sie liefern ergiebige Färbungen in rotstichigen Brauntönen mit guten Echtheiten.

EP 0 176 730 A2

BAYER AKTIENGESELLSCHAFT 5090 Leverkusen, Bayerwerk
Konzernverwaltung RP
Patentabteilung My/ABc

## Polyazofarbstoffe

Gegenstand der vorliegenden Erfindung sind die Polyazofarbstoffe der Formel

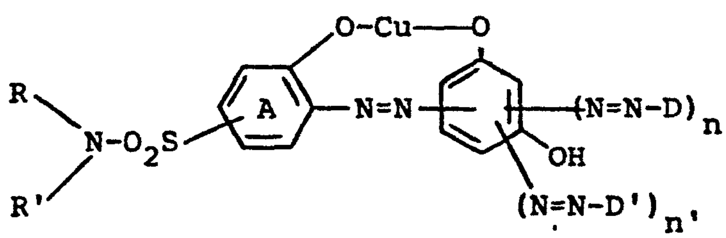

(I)

worin

D, D' = Rest einer von metallkomplexbildenden Gruppen in o-Stellung zur Azogruppe freien Diazokomponente der Benzol-, Naphthalin- oder Diphenylamin-Reihe,

n, n' = 0 - 1, und

R, R' = H, Alkyl oder Aryl, wobei der Ring A durch Cl oder $NO_2$ substituiert sein kann.

 

n + n' ist bevorzugt $\geq$0,8.

Die Reste D, D' können weitere übliche Substituenten enthalten, beispielsweise $SO_3H$, $NO_2$, Halogen wie Cl und Br, Alkyl, Alkoxy, Sulfamoyl, Carbamoyl, Acylamino oder ein nicht in o-Stellung zur Azogruppe stehendes COOH.

Bevorzugte Alkyl- und Alkoxygruppen sind solche mit 1 - 4 C-Atomen, die gegebenenfalls weiter substituiert sein können, beispielsweise durch CN, Cl, OH, $C_1$-$C_4$-Alkoxy, Phenyl. Besonders bevorzugt sind Methyl bzw. Methoxy.

Geeignete Arylreste sind insbesondere gegebenenfalls substituierte Phenylreste, bevorzugt mit Substituenten Halogen, insbesondere Cl und Br, $NO_2$, $C_1$-$C_4$-Alkyl, $C_1$-$C_4$-Alkoxy.

Die an den Resten D und D' sitzenden Sulfamoyl- und Carbamoylgruppen können ebenfalls durch die oben genannten Alkyl- oder Arylreste mono- oder disubstituiert sein.

Bevorzugte Acylaminogruppen sind $C_1$-$C_4$-Alkylcarbonylamino, $C_1$-$C_4$-Alkoxycarbonylamino, $C_1$-$C_4$-Alkylsulfonylamino.

Bevorzugte Reste D bzw. D' sind:

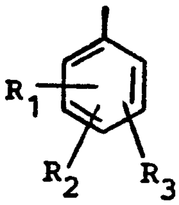

(II)

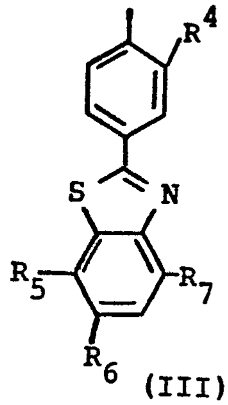

(III)

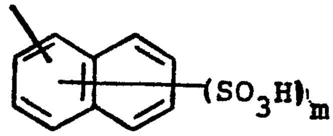

(IV)

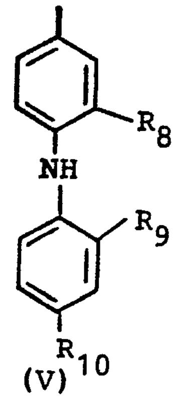

(V)

worin

| | |
|---|---|
| $R_1$, $R_2$, $R_3$ = | H oder Substituent, insbesondere einer der oben genannten, |
| $R_4$ = | H, $CH_3$ oder $SO_3H$, |
| $R_5$ = | H oder $SO_3H$, |
| $R_6$, $R_7$ = | H oder $CH_3$, |
| $R_8$ = | H oder $SO_3H$, |
| $R_9$, $R_{10}$ = | H, Cl, $OCH_3$, $NO_2$ oder $SO_3H$ und |
| m = | 0, 1, 2 oder 3 bedeuten. |

Bevorzugte Farbstoffe sind solche der Formel

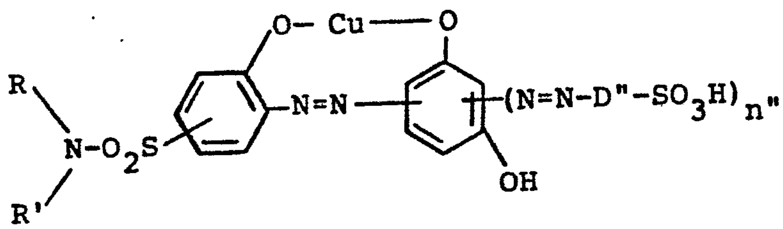

(VI)

worin

$-D''-SO_3H$ für einen Rest der Formel VII, VIII, IX oder V steht, mit der Maßgabe, daß einer der Reste $R_8$, $R_9$, $R_{10}$ von Formel V eine Sulfogruppe ist,

n" = eine Zahl von 0,8 - 2 darstellt.

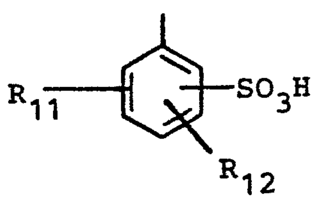

(VII)

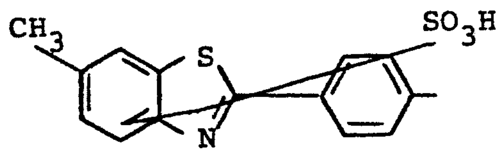

(VIII)

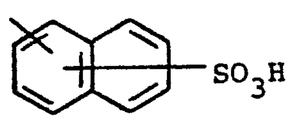

(IX)

In Formel VII sind $R_{11}$ und $R_{12}$ vorzugsweise H, Cl, $NO_2$, $CH_3$, $OCH_3$, $OC_2H_5$.

Bevorzugte Farbstoffe der Formel VI sind wiederum solche mit R, R' = H, $CH_3$, $C_2H_5$, $CH_2CH_2OH$ und n" = 0,8 - 1,2.

Die erfindungsgemäßen Farbstoffe der Formel I bzw. VI können nach an sich bekannten Methoden hergestellt werden, indem man 1 Mol Resorcin in beliebiger Reihenfolge mit 0,8 - 1,2 Mol diazotiertem Aminophenol X, n Mol diazotiertem Amin $H_2N$-D und n' Mol diazotiertem Amin $H_2N$-D' ankuppelt und das erhaltene Kupplungsprodukt mit kupferabgebenden Mitteln metallisiert.

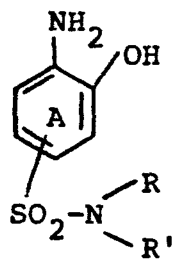

X

Vorzugsweise kuppelt man Resorcin zuerst mit den eine geringere Kupplungsenergie aufweisenden o-Aminophenolen X an. In diesem Fall kann die Metallisierung vor die weitere Kupplung mit den Aminen $H_2N$-D und $H_2N$-D' gelegt werden. Die Kupplung mit den o-Aminophenolen X und die Metallisierung können auch beispielsweise entsprechend der US-PS 2 042 810 in einem Schritt erfolgen, indem beispielsweise Resorcin und ein geeignetes kuperabgebendes Mittel vorgelegt und das Gemisch erst mit einem diazotierten o-Aminophenol XI und dann mit einem diazotierten Amin $H_2N$-D und $H_2$-D' umgesetzt wird.

Die Metallisierung mit kupferabgebenden Mitteln erfolgt in an sich ebenfalls bekannter Weise in wäßrigem oder wäßrig-organischem Milieu bei Temperaturen von 20 - 140°C, vorzugsweise bei 70-100°C, unter Normaldruck oder einem höheren Druck, bei einem pH von 3-12, vorzugsweise unter schwach sauren oder schwach alkalischen Bedingungen. Als Lösungsmittel können niedere Alkohole wie Ethanol, Carbonamide, wie Formamid oder N-Methylpyrrolidon, Ethylenglykol oder dessen Mono-$C_1$-$C_4$-Alkylether zugesetzt werden. Geeignete kupferabgebende Mittel sind hauptsächlich die Kupfersalze von anorganischen oder organischen Säuren, wie Kupfercarbonat, Kupferchlorid, Kupfersulfat oder Kupferacetat. Die Metallisierung kann auch in Gegenwart von so viel Ammoniak oder Aminen durchgeführt werden, daß das Kupfersalz als Tetraminkomplex gelöst ist.

Bei Einhaltung von höheren Temperaturen, gegebenenfalls in geschlossener Apparatur bei 100°C übersteigenden Temperaturen, können auch die methoxygruppenhaltigen Azofarbstoffe XI unter Abspaltung der Methylgruppe zu XII gekupfert werden. Die Herstellung der Kupferkomplexe XII gelingt auch nach H. Pfitzner und H. Baumann (Angew. Chemie 70, 232 - 238 (1958)) unter den Bedingungen der oxydativen Kupferung. In diesem Fall werden die Farbstoffe XIII im allgemeinen bei 20-100°C im schwach saurem Milieu mit Derivaten des Wasserstoffperoxids behandelt, beispielsweise mit einem Salz der Peroxyschwefelsäure oder Perborsäure, vorzugsweise jedoch mit Wasserstoffperoxid selbst - Bedingungen, bei denen die komplexbildende Hydroxylgruppe und Kupfer gleichzeitig in das Farbstoffmolekül eingebaut werden.

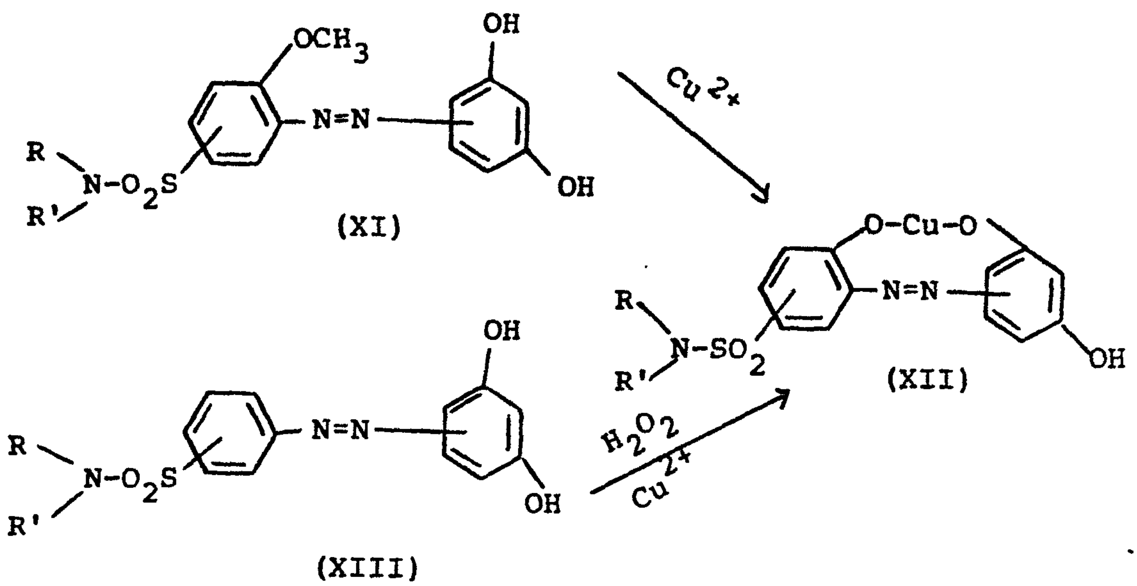


(XI)

(XII)

(XIII)

Die Metallisierung findet vorzugsweise in Anwesenheit von Säureakzeptoren statt, beispielsweise von Carbonaten, Hydrogencarbonaten, Oxiden und Hydroxiden von Alkali- und Erdalkalimetallen, wie $Li_2CO_3$, $Na_2CO_3$, $K_2CO_3$, $LiHCO_3$, $NaHCO_3$, $KHCO_3$, LiOH, NaOH, KOH, MgO oder CaO, oder von alkalisch wirkenden Salzen von Alkalimetallen, wie Natrium- oder Kaliumacetat, oder von Ammoniak oder niedrigalkylsubstituiertem Ammoniak.

Die neuen Metallkomplexfarbstoffe können durch Sprühtrocknen oder Ausfällen mit Elektrolyten, wie Natrium- oder Kaliumchlorid, isoliert werden. Sie eignen sich insbesondere zum Färben und Bedrucken stickstoffhaltiger Materialien, wie Seide, Wolle, synthetische Fasern aus Polyamiden oder Polyurethanen, und bevorzugt zum Färben von Leder, wobei neben Chromleder auch nachgegerbte Leder und Veloursleder in Frage kommen. Sie sind besonders zum Färben aus schwach alkalischem, z.B. ammoniakalkalischem, neutralen oder schwach saurem, z.B. essigsaurem, Bad geeignet und liefern ergiebige Färbungen in lebhaften, meist rotstichigen Brauntönen mit ausgezeichneten Echtheiten.

Die angegebenen Formeln sind die der freien Säuren. Im allgemeinen setzt man die Salze, insbesondere die Alkalisalze, wie die Lithium- und Natriumsalze, oder die Ammoniumsalze ein.

Beispiel 1

18,8 g 2-Aminophenol-4-sulfonamid werden in 100 ml Wasser und 20 ml 10 n Salzsäure angerührt. Nach Zugabe von 100 g Eis läßt man innerhalb von 20 Minuten 23 ml einer 4,35 n Natriumnitritlösung zutropfen. Man rührt die Suspension des Diazoniumsalzes eine halbe Stunde weiter und zerstört dann eventuell überschüssige salpetrige Säure mit etwas Amidosulfonsäure.

Die Lösung von 11 g Resorcin in 80 ml Wasser und 10 ml 10 n Natronlauge wird durch Zusatz von 100 g Eis auf ca. 0°C gekühlt und innerhalb von 20 Minuten mit der Suspension des Diazoniumsalzes vereinigt. Gleichzeitig wird durch Zutropfen von etwa 8 ml 10 n Natronlauge der pH bei 8,5 gehalten. Die Kupplung ist sofort beendet.

22,3 g 1-Naphthylamin-4-sulfonsäure werden in 100 ml Wasser mit 10 ml 10 n Natronlauge gelöst, mit 28 ml 10 n Salzsäure wieder gefällt und nach Zugabe von 150 g Eis innerhalb von 20 Minuten mit 23 ml einer 4,35 n Natriumnitritlösung diazotiert. 30 Minuten später wird eventuell überschüssige salpetrige Säure mit Amidosulfonsäure zerstört.

Die diazotierte 1-Naphthylamin-4-sulfonsäure wird innerhalb von 30 Minuten zur Suspension des Monoazofarbstoffes gegeben, wobei gleichzeitig ca. 25 ml 10 n Natronlauge so zulaufen, daß der pH bei 8,5 gehalten wird. Nach 2 Stunden Rühren bei pH 8,5 ist der Bisazofarbstoff fertig.

Die Suspension des Disazofarbstoffes wird mit wenigen Tropfen 10 n Salzsäure neutralisiert, mit 20 g wasserfreiem Natriumacetat versetzt und auf 50°C erwärmt. Bei dieser Temperatur werden im Verlauf von 30 Minuten 25 g $CuSO_4 5H_2O$ eingetragen. Eine Stunde später wird der gebildete Kupferdisazokomplex der Formel

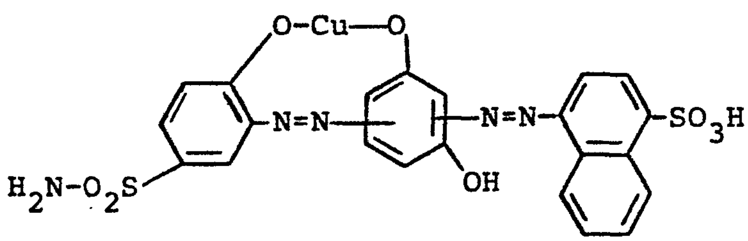

durch Zusatz von 20 % Natriumchlorid ausgesalzen, abgesaugt und getrocknet. Er stellt ein braunes Pulver dar, welches Leder in rotstichig braunen Tönen von guter Lichtechtheit und guten Gebrauchsechtheiten färbt.

Beispiel 2

Tauscht man in Beispiel 1 lediglich die 22,3 g 1-Naphthylamin-4-sulfonsäure gegen die gleiche Menge 1-Naphthylamin-6-sulfonsäure aus und verfährt sonst, wie dort beschrieben, so erhält man den Kupferdisazokomplex der Formel

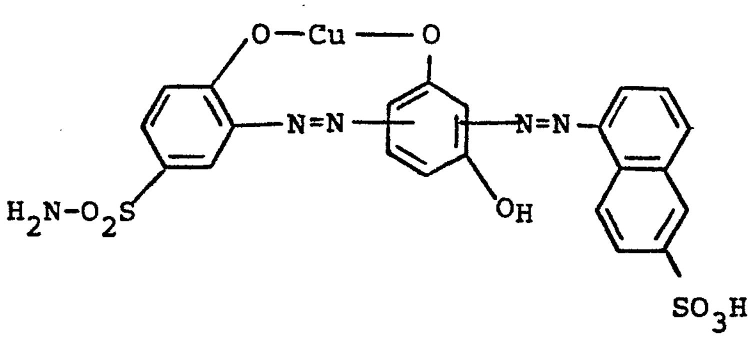

welcher Wolle, Polyamid und Leder in den gleichen rotstichig braunen Nuancen färbt wie der Farbstoff des Beispiels 1.

Beispiel 3

18,8 g 2-Aminophenol-4-sulfonamid werden, wie in Beispiel 1 beschrieben, diazotiert und auf 11 g Resorcin gekuppelt. Es folgt die Umsetzung mit 22,3 g diazotierter 1-Naphthylamin-4-sulfonsäure und 22,3 g diazotierter 1-Naphthylamin-6-sulfonsäure und die Metallisierung mit 25 g $CuSO_4 5H_2O$. Nach beendeter Reaktion erhält man den Kupfertrisazofarbstoff der Formel

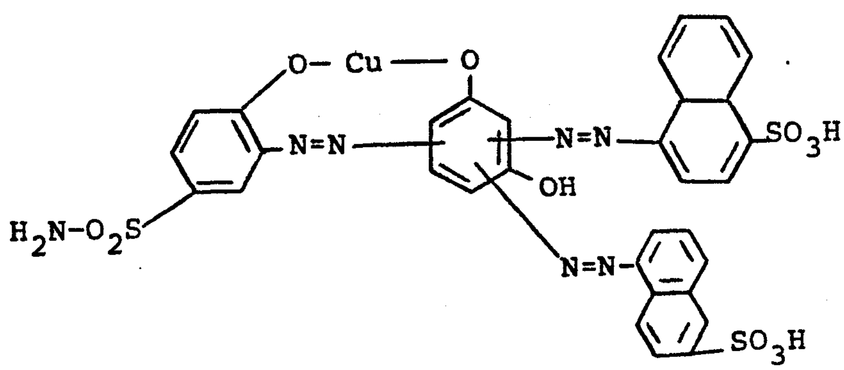

welcher auf Leder etwas gedecktere Braunfärbungen liefert als die Farbstoffe des Beispiels 1 und 2.

Beispiel 4

Ersetzt man in Beispiel 1 die 22,3 g diazotierte 1-Naphthylamin-4-sulfonsäure gegen die gleiche Menge diazotierte 2-Naphthylamin-5-sulfonsäure, so gewinnt man den Farbstoff der folgenden Formel

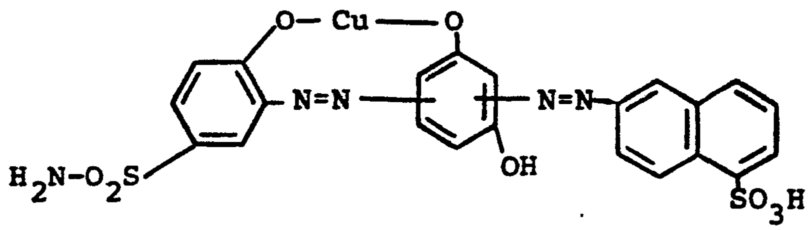

Dieser gibt auf Leder klarere Braunfärbungen als die Farbstoffe des Beispiels 1 und 2.

Verfährt man wie in Beispiel 1, verwendet jedoch äquivalente Mengen der in Spalte 1 der folgenden Tabelle aufgeführten o-Aminophenole sowie der in Spalte 2 aufgeführten Naphthylaminsulfonsäuren, so gelangt man zu Kupferkomplexfarbstoffen, welche Leder in der in der 3. Spalte angegebenen Nuance färben.

Tabelle

| o-Aminophenol | Naphthylaminsulfonsäure | Nuance auf Leder |
|---|---|---|
| 2-Aminophenol-4-sulfonamid | 1-Naphthylamin-5-sulfonsäure | rotstichig Braun |
| 2-Aminophenol-4 sulfonamid | 1-Naphthylamin-8-sulfonsäure | rotstichig Braun |
| 2-Aminophenol-4-sulfonamid | 1-Naphthylamin-7-sulfonsäure | rotstichig Braun |
| 2-Aminophenol-4-sulfonamid | 1-Naphthylamin-3-sulfonsäure | rotstichig Braun |
| 2-Aminophenol-4-dimethylsulfonamid | 1-Naphthylamin-4,8-disulfonsäure | rotstichig Braun |
| 2-Aminophenol-4-sulfonamid | 2-Naphthylamin-1-sulfonsäure | rotstichig Braun |
| 2-Aminophenol-4-sulfonamid | 2-Naphthylamin-6-sulfonsäure | rotstichig Braun |

Tabelle (Fortsetzung)

| o-Aminophenol | Naphthylaminosulfonsäure | Nuance auf Leder |
|---|---|---|
| 2-Aminophenol-4-sulfonamid | 2-Naphthylamin-7-sulfonsäure | rotstichig Braun |
| 2-Aminophenol-4-sulfonamid | 2-Naphthylamin-8-sulfonsäure | rotstichig Braun |
| 2-Aminophenol-4-dimethylsulfonamid | 2-Naphthylamin-8-sulfonsäure | rotstichig Braun |
| 2-Aminophenol-4-diethylsulfonamid | 2-Naphthylamin-1,5-disulfonsäure | rotstichig Braun |
| 2-Aminophenol-5-sulfonamid | 1-Naphthylamin-6-sulfonsäure | Rotbraun |
| 2-Aminophenol-5-sulfonamid | 1-Naphthylamin-5-sulfonsäure | Rotbraun |
| 2-Aminophenol-5-sulfonamid | 2-Naphthylamin-5-sulfonsäure | Rotbraun |
| 2-Aminophenol-5-dimethylsulfonamid | 2-Naphthylamin-1-sulfonsäure | Rotbraun |
| 2-Aminophenol-5-dimethylsulfonamid | 1-Naphthylamin-3,7-disulfonsäure | Rotbraun |

Beispiel 5

Der aus 18,8 g diazotiertem 2-Aminophenol-4-sulfonamid und 11 g Resorcin gewonnene Monoazofarbstoff gibt beim weiteren Ankuppeln mit 32 g diazotierter 2-(4-Aminophenyl)-6-methylbenzothiazol-7-sulfonsäure und nachfolgender Metallisierung mit 25 g $CuSO_4 5H_2O$ den Kupferkomplexfarbstoff der Formel

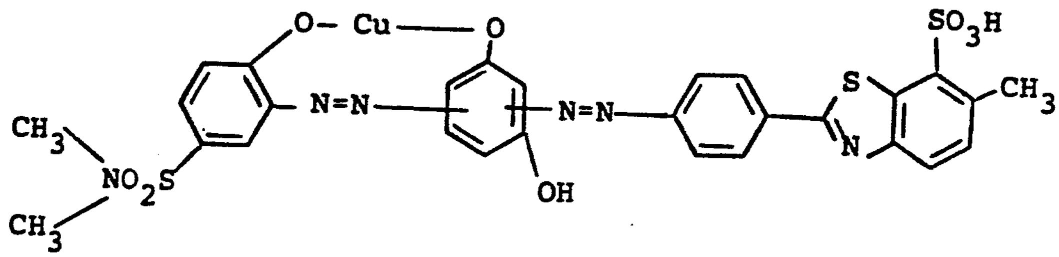

Dieser färbt Leder in lebhaften mittleren Brauntönen mit guten Echtheiten.

Beispiel 6

Beim Austausch der 18,8 g 2-Aminophenol-4-sulfonamid gegen die gleiche Menge des 2-Aminophenol-5-sulfonamids erhält man den Farbstoff der Formel

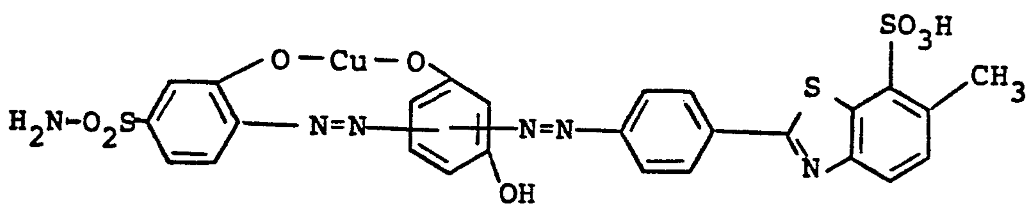

dessen Färbungen auf Leder röter sind.

Beispiel 7

Das aus 18,8 g 2-Aminophenol-4-sulfonamid und 11 g Resorcin hergestellte Kupplungsprodukt wird mit 21,8 g auf üblichem Wege diazotierter 4-Nitro-anilin-2-sulfonsäure umgesetzt und anschließend gekupfert. Der gebildete Farbstoff der Formel

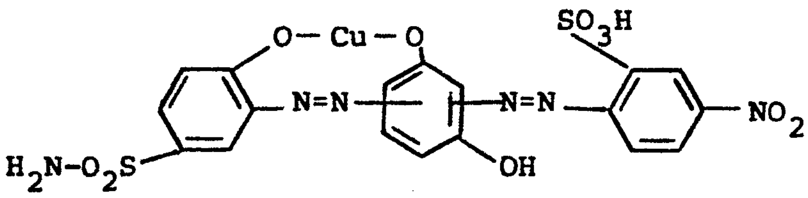

liefert auf Leder rotstichig braune Färbungen.

Analog erhält man durch Verwendung stöchiometrischer Mengen der in der folgenden Tabelle gegenüber gestellten o-Aminophenole und Anilinsulfonsäuren weitere Kupferkomplexfarbstoffe, die auf Leder mit der in Spalte 3 angegebenen Nuance aufziehen.

Tabelle

| o-Aminophenol | Anilinsulfonsäure | Nuance auf Leder |
|---|---|---|
| 2-Aminophenol-5-sulfonamid | 4-Nitroanilin-2-sulfonsäure | Rotbraun |
| 2-Aminophenol-4-chlor-5-sulfonamid | 2-Nitroanilin-4-sulfonsäure | " |
| 2-Aminophenol-6-nitro-4-sulfonamid | 4-Nitroanilin-2-sulfonsäure | " |
| 2-Aminophenol-4-sulfonamid | 2-Chloranilin-4-sulfonsäure | Orangebraun |
| 2-Aminophenol-4-sulfonamid | 2,5-Dichloranilin-4-sulfonsäure | " |
| 2-Aminophenol-4-methylsulfonamid | 2-Methylanilin-4-sulfonsäure | " |
| 2-Aminophenol-4-dimethylsulfonamid | 2-Methyl-6-chloranilin-4-sulfonsäure | " |
| 2-Aminophenol-4-diethylsulfonamid | 2-Methyl-4-nitroanilin-5-sulfonsäure | " |
| 2-Aminophenol-5-sulfonamid | 4-Methoxyanilin-2-sulfonsäure | rotstichig Braun |

Tabelle (Fortsetzung)

| o-Aminophenol | Anilinsulfonsäure | Nuance auf Leder |
|---|---|---|
| 2-Aminophenol-5-dimethylsulfonamid | 4-Ethoxyanilin-3-sulfonsäure | rotstichig Braun |
| 2-Aminophenol-4-sulfonamid | 2-Methoxy-4-nitroanilin-5-sulfonsäure | " |
| 2-Aminophenol-4-dimethylsulfonamid | 2,4-Dichloranilin-6-sulfonsäure | Orange braun |
| 2-Aminophenol-4-sulfonamid | 2,4-Dinitroanilin-6-sulfonsäure | gedecktes Orangebraun |
| 2-Aminophenol-5-sulfonamid | 3-Methyl-4-chloranilin-6-sulfonsäure | rotstichiges Braun |
| 2-Aminophenol-5-sulfonamid | 2-Methoxy-4-nitroanilin-6-sulfonsäure | Rotbraun |
| 2-Aminophenol-6-nitro-4-sulfonamid | 4-Methoxyanilin-2-sulfonsäure | rotstichig Braun |

Beispiel 8

18,8 g 2-Aminophenol-4-sulfonamid werden, wie in Beispiel 1, beschrieben diazotiert und auf 11 g Resorcin gekuppelt. 30,9 g 4'-Amino-4-nitrodiphenyl-2-sulfonsäure werden auf dem üblichen Weg diazotiert und auf das Reaktionsprodukt aus diazotiertem 2-Aminophenol-4-sulfonamid und Resorcin gekuppelt. Nach der Metallisierung mit 25 g $CuSO_4.5H_2O$ erhält man den Kupferkomplexfarbstoff der Formel

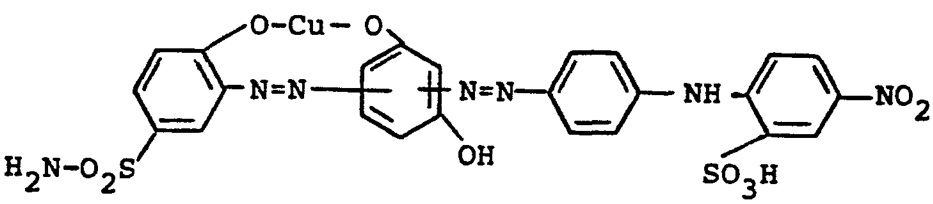

der Leder in mittleren Braunnuancen mit guten Echtheiten anfärbt.

In den Spalten 1 und 2 der folgenden Tabelle sind weitere o-Aminophenole und Diphenylamin-Derivate aufgelistet, aus denen man dem Beispiel 8 entsprechende Kupferkomplexfarbstoffe erhält. Es sind wertvolle auf Leder gut aufbauende Farbstoffe, deren Nuance in Spalte 3 angegeben ist.

Tabelle

| o-Aminophenol | Diphenylamin | Nuance auf Leder |
|---|---|---|
| 2-Aminophenol-4-sulfonamid | 4'-Amino-2-nitrodiphenyl-4-sulfonsäure | mittleres Braun |
| 2-Aminophenol-4-dimethylsulfonamid | 4-Aminodiphenylamin-2-sulfonsäure | rotstichiges Braun |
| 2-Aminophenol-4-diethylsulfonamid | 4-Amino-4'-chlordiphenylamin-2-sulfonsäure | " |
| 2-Aminophenol-5-sulfonamid | 4-Amino-4'-methoxydiphenylamin-2-sulfonsäure | " |
| 2-Aminophenol-5-dimethylsulfonamid | 4'-Amino-4-nitrodiphenylamin-2-sulfonsäure | Rotbraun |
| 2-Aminophenol-5-sulfonamid | 4'-Amino-2-nitrodiphenylamin-4-sulfonsäure | " |
| 2-Aminophenol-4-methylsulfonamid | 4-Aminodiphenylamin-2-sulfonsäure | rotstichiges Braun |
| 2-Aminophenol-4-chlor-5-sulfonamid | 4-Aminodiphenylamin-2-sulfonsäure | " |
| 2-Aminophenol-4-diethylsulfonamid | 4-Amino-4'-methoxydiphenylamin-2-sulfonsäure | " |

Patentansprüche

1. Polyazofarbstoffe der Formel

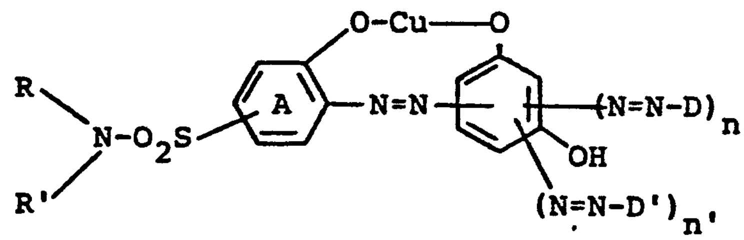

(I)

worin

D, D' = Rest einer von metallkomplexbildenden Gruppen in o-Stellung zur Azogruppe freien Diazokomponente der Benzol-, Naphthalin- oder Diphenylamin-Reihe,

n, n' = 0 - 1, und

R, R' = H, Alkyl oder Aryl, wobei der Ring A durch Cl oder $NO_2$ substituiert sein kann

2. Farbstoffe des Anspruchs 1 mit D bzw. D' = Rest der Formel

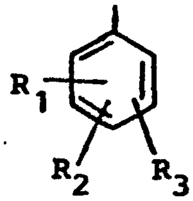
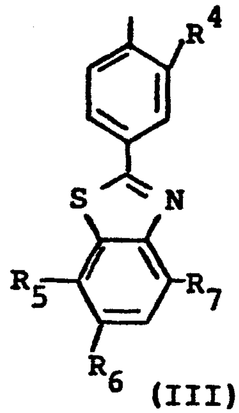
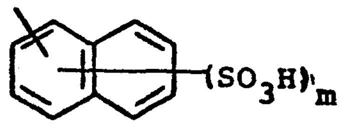
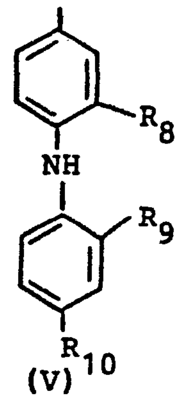

(II) (III) (IV) (V)

worin

| | |
|---|---|
| $R_1$, $R_2$, $R_3$ = | H oder Substituent, insbesondere einer oder oben genannten |
| $R_4$ = | H, $CH_3$ oder $SO_3H$, |
| $R_5$ = | H oder $SO_3H$, |
| $R_6$, $R_7$ = | H oder $CH_3$, |
| $R_8$ = | H oder $SO_3H$, |
| $R_9$, $R_{10}$ = | H, Cl, $OCH_3$, $NO_2$ oder $SO_3H$ und |
| m = | 0, 1, 2 oder 3 bedeuten. |

3. Farbstoffe des Anspruchs 1 der Formel

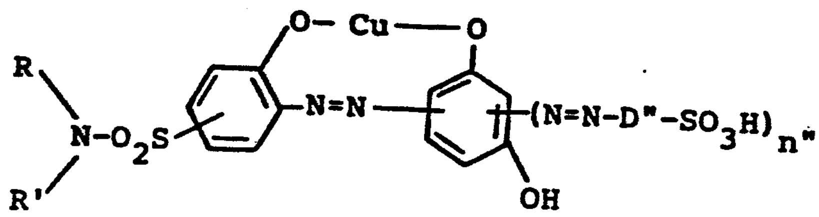

(VI)

worin

n" = 0,8 - 2 und

-D"-$SO_3H$ =

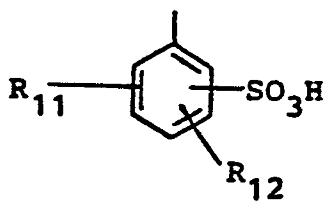

(VII)

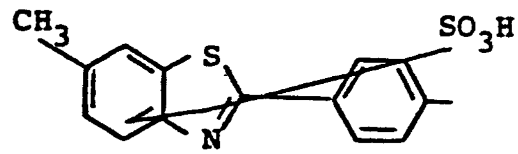

(VIII)

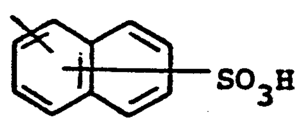

(IX)

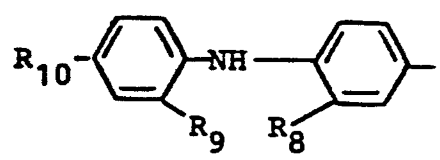

(V)

worin $R_{11}$ und $R_{12}$ = H, Cl, $NO_2$, $CH_3$, $OCH_3$, $OC_2H_5$, mit der Maßgabe, daß einer der Reste $R_8$-$R_{10}$ für -$SO_3H$ steht.

4. Verwendung der Farbstoffe der Ansprüche 1-3 zum Färben und Bedrucken natürlicher oder synthetischer stickstoffhaltiger Materialien.